# EUROPEAN PATENT SPECIFICATION

(11) **EP 2 156 922 B1**
(45) Date of publication and mention of the grant of the patent: **18.04.2012**
(21) Application number: 09251703.6
(22) Date of filing: 01.07.2009
(51) Int. Cl.: B23B 31/40, B23B 31/117, B23P 13/00

(54) **Method of manufacturing thin wall isogrid casings**
Verfahren zur Herstellung von dünnwändigen Isogittergehäusen
Procédé de fabrication de boîtiers isogrilles à paroi mince

(30) Priority: 19.08.2008 GB 0815018
(43) Date of publication of application: 24.02.2010
(73) Proprietor: Rolls-Royce plc, London SW1E 6AT (GB)
(72) Inventor: Green, Richard, Bristol South Gloucestershire BS16 6QN (GB); Frost, Arthur Peter, Bristol South Gloucestershire BS35 1JN (GB)
(74) Representative: Tindall, Adam

(56) References cited:
- EP-A- 0 240 218
- EP-A- 1 595 638
- JP-A- 63 312 001
- US-B1- 6 352 496
- US-B1- 6 742 785

## Description

### Field of Invention

This invention relates to a method of manufacturing thin-walled isogrid casings by machining processes and to a machining support apparatus for use in such a method.

### Background of the Invention

Isogrids are used for reinforcing thin-wall components such as gas turbine engine casings or for forming lightweight lattice type structures, for example for use in space vehicle applications. An isogrid is a structure which comprises a triangular pattern of ribs arranged in rows of equal sided triangles. Isogrids are used to increase the stiffness of thin-wall structures while minimising weight. Isogrids have found particular application in gas turbine aero engine applications where thin-wall engine casing ducts are reinforced with isogrids to provide additional stiffness for supporting ancillary units and components.

The minimum pocket wall thickness achievable with Numerically Controlled (NC) mill cutters and the like has been limited by distortion of the casing due to cutter induced stresses resulting in rupture and tearing of the thin wall pocket sections.

GB2387799 (by the same applicant) discloses a method of manufacturing a thin wall isogrid casing by a chip machining process. A substantially cylindrical casing is positioned on a support, the support having a substantially continuous cylindrical support surface engaging at least part of the inner or outer surface of the casing. A plurality of recessed pockets are then machined in the said inner or outer surface of the casing opposite the surface engaged by the support. The support reacts loads acting on the casing by the chip machining tool during machining to minimise distortion of the casing and tearing of the pockets being formed. However, this method requires a filler material to be provided between the casing and the support surface to fill gaps that occur between the casing and the support due to geometric differences between the casing and the support, for example due to manufacturing tolerances resulting in slightly oval casing cross sections. The filler material may shrink during curing and the component may expand during machining, causing gaps. Hence regions of the casing may not be properly supported after the casing and support have been mated.

GB2413977 (by the same applicant) also discloses a method of manufacturing a thin wall isogrid casing by a chip machining process. A frusto conical casing is mated with a support, the support having a substantially continuous frusto conical support surface engaging at least part of the inner or outer surface of the casing. During the mating process, the casing is deformed such that the support surface engages substantially the whole of the inner or outer surface of the casing. This method works well but only for frusto conical casings where the diameter of the casing varies along its length, allowing for a support of varying diameter to engage with substantially all of the surface of the casing.

United States Patent 6,742,785 describes a clamping device for thin walled hollow parts.

Prior to the inventions described in the preceding two paragraphs it was not possible to manufacture isogrid reinforced casings where the pocket wall thickness is less than 1 mm other than by chemical machining, as described in US-A-5,122,242 where it is mentioned that chemical machining can be used for producing pocket wall thicknesses and rib widths to a minimum of 0.5mm.

In chemical machining metal removal is achieved by a reverse electro plating process which produces a metal hydroxide of the metal being removed suspended as an emulsion in the electrolytic solution. Removal and disposal of the metal hydroxide emulsion is both hazardous and expensive and this combined with other factors results in significant additional cost to the machined casing.

There is a requirement therefore for a method of producing thin wall section isogrid reinforced casings which avoids the use of hazardous chemicals, as in chemical machining, yet readily enables pocket wall thicknesses of 1 mm or less to be achieved without rupture or damage to the isogrid due to induced machining stresses.

### Summary of the Invention

According to a first aspect of the invention there is provided a method of manufacturing a thin wall isogrid or the like casing by a machining process; the said method comprising the steps of:
first mating a surface of a casing precursor opposite to a surface of the casing precursor to be machined with a substantially continuous support surface of a hollow support sleeve;
then axially displacing the support sleeve and deformation member relative to one another to engage an engagement surface of a deformation member with an engagement surface of the support sleeve, the engagement surface of the support sleeve being opposite the support surface and the deformation member being co-axially arranged with the support sleeve, the deformation member engagement surface and support sleeve engagement surface being configured such that the support sleeve is deformed by the deformation member by the relative axial displacement in order to mate the support surface with substantially the whole of the mating surface of the casing precursor opposite the surface to be machined; and
machining a plurality of recessed pockets in the said surface of the casing precursor opposite the surface engaged by the said support sleeve; whereby the support sleeve reacts loads acting on the casing precursor by a machining tool during machining, thereby minimising distortion of the casing precursor and tearing of the pockets being formed.

According to a second aspect of the invention there is provided Machining support apparatus for use in manufacturing a thin wall isogrid casing or the like by a machining process; the said support apparatus comprising :
a hollow support sleeve having a substantially continuous support surface for mating with a surface of a casing precursor opposite to the surface of a casing precursor to be machined, and an engagement surface substantially opposite the support surface;
a deformation member with an engagement surface for coaxial location and engagement with the engagement surface of the support sleeve,
the deformation member engagement surface and support sleeve engagement surface being sized such that relative axial displacement of the support sleeve and deformation member will deform the support sleeve;
   characterised in that either:
      the deformation member is configured to be inserted in the support sleeve and has a maximum external diameter at least 1% greater than the maximum internal diameter of the support sleeve when the support sleeve is in a non deformed state; or
the support sleeve is configured to be inserted in the deformation member and has a maximum external diameter at least 1% greater than the maximum internal diameter of the deformation member when the support sleeve is in a non deformed state.

This method and apparatus is advantageous since they provide a method and means for providing support over substantially all of a casing surface to be machined. The deformation member keys into the support sleeve and deforms the sleeve to engage with the casing precursor. The support sleeve is maintained in a fixed position relative to the casing throughout the process. That is to say, the support sleeve does not slide relative to the casing, since it is the action of the deformation member relative to the support sleeve which causes the deformation of the support sleeve. This eliminates the possibility of damage to the casing due to the relative motion between the casing and the support.

### Brief Description of the Drawings

Embodiments of the invention will now be described with reference to the accompanying drawings, in which:
Figure 1 shows an exploded view of a casing and a first embodiment of a machine support apparatus comprising a support sleeve and deformation member according to of the present invention;
Figure 2 shows a close up exploded view of engagement features provided on engagement surfaces of the support sleeve and engagement member of the embodiment of Figure 1;
Figure 3a to 3e show how the engagement features of the support sleeve and deformation member engage;
Figure 4 shows an exploded view of a casing and a second embodiment of a machine support apparatus according to of the present invention; and
Figure 5 shows a close up exploded view of engagement features provided on engagement surfaces of the support sleeve and engagement member of the embodiment of Figure 4.

### Detailed Description of Embodiments

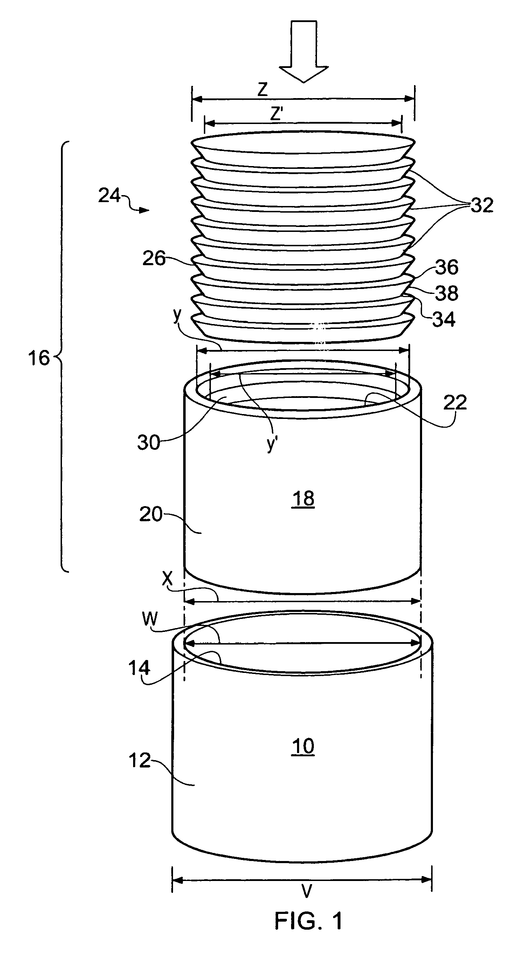

Figure 1 shows a blank cylindrical casing precursor 10 to be machined by a machining process to produce a casing with an iso-grid structure on the outer surface 12 of the blank. The casing precursor 10 has an external surface 12 having a diameter v and an internal surface 14 of diameter w. The precursor 10 does not form part of the invention and is mentioned here merely to assist in describing the machining support apparatus 16 according to the present invention. The apparatus 16 comprises a hollow support sleeve 18 having a substantially continuous support surface 20 for mating with the internal surface 14 of casing precursor 10. The hollow support sleeve 18 is also provided with an inner engagement surface 22 substantially opposite the support surface 20. The (outer) support surface 20 has a diameter x. The (inner) engagement surface 22 of the support sleeve 20 has a maximum internal diameter y and a minimum internal diameter y'. The apparatus also includes a deformation member 24 with an engagement surface 26 for coaxial location and engagement with the (inner) engagement surface 22 of the hollow support sleeve 18. The deformation member 24 has a maximum external diameter z and a minimum external diameter z'. The deformation member 24 is of rigid construction and configured to retain its shape. It is substantially non-deformable.

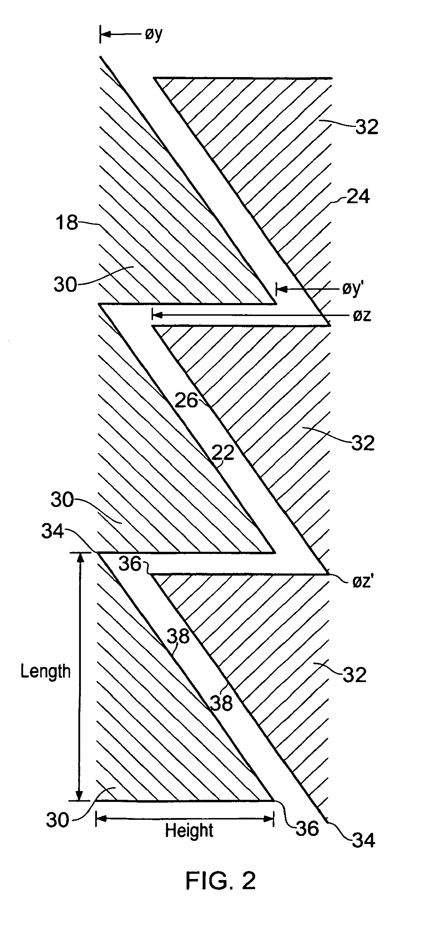

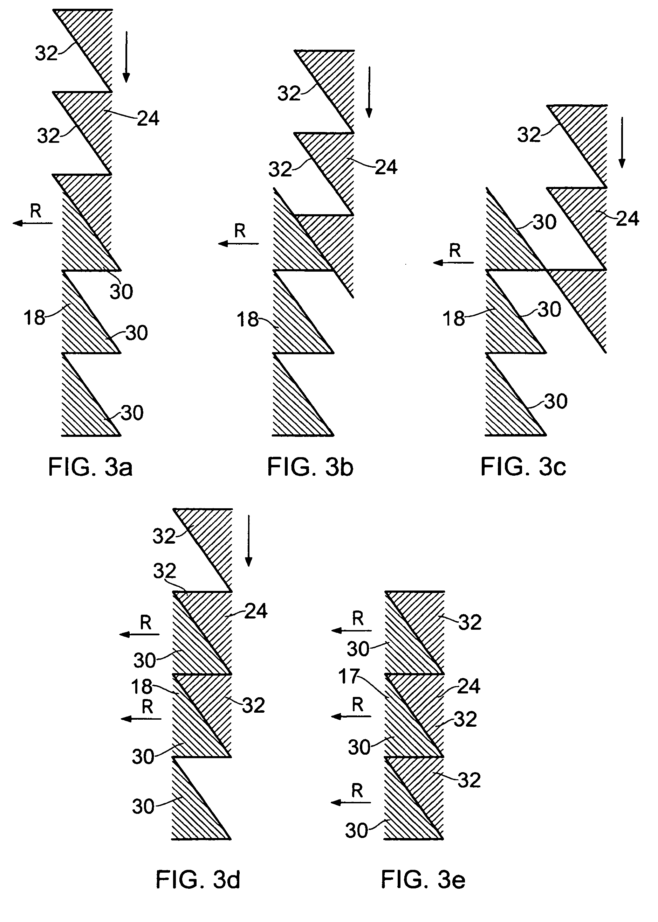

An enlarged view of the engagement surfaces 22,26 are shown in Figure 2. The deformation member 24 is shown as if entered in the support sleeve 18. The engagement surfaces 22,26 are shown separated for clarity, but it will be appreciated that in practice, the surfaces 22,26 will be in contact with one another (as discussed later with reference to Figure 3) since the deformation member 24 is "oversized" relative to the support sleeve 18. In the example shown, the engagement surface 22,26 of the support sleeve 18 comprises a plurality of ramps 30 which are complementary in shape to a number of ramps 32 provided on the engagement surface 26 of the deformation member 24. In other embodiments (not shown) each engagement surface is provided with only a single ramp 30,32. The ramps 30,32 each comprise a start point 34 and an end point 36 with an inclined region 38 of increasing height therebetween. The ramp height is defined as the difference in diameter between the start point 34 and any point on the inclined surface 38 between the start point 34 and the end point 36.

With the support sleeve in a non deformed state, the support sleeve 18 and deformation member 24 are sized such that there is at least a 1% difference in diameter between any point on the inclined surface 38 of the ramp 30 of the engagement surface 22 of the support sleeve 18 and a corresponding point on the ramp 30 on the engagement surface 26 of the deformation member 24.

Hence, in the embodiment shown in Figure 1 the diameter of the inclined surface 38 of the ramp 32 of the engagement surface 26 of the deformation member will be 1% greater than a corresponding point on the ramp 30 on the engagement surface 22 of the support surface 22. Hence the maximum diameter z of the deformation member 24 is 1% greater than the maximum internal diameter y of the support sleeve 18. That is to say the diameter z at an end point 36 on a ramp 32 of the deformation member 24 (i.e. at the maximum diameter z of the deformation member 24) will be 1% greater than the diameter y at a start point 34 on a ramp 30 of the support sleeve 18 (i.e. at the maximum internal diameter y of the support sleeve 18). Likewise, the diameter z' at a start point 34 on a ramp 32 of the deformation member 24 (i.e. at the minimum diameter z' of the deformation member 24) will be 1% greater than the diameter y' at an end point 36 on a ramp 30 of the support sleeve 18 (i.e. at the minimum internal diameter y' of the support sleeve 18). Likewise, all points along the inclined region 38 between the start point 34 and end point 36 of a ramp 32 of the deformation member 24 will have a diameter 1% greater than the diameter at all points along the inclined region 38 between the start point 34 and end point 36 of a ramp 30 of the support sleeve 18.

The ratio of ramp 30,32 height at the end point 36 to ramp length is in the range of 1 : 5 to 1 : 10, where the ramp length is defined as the axial distance between the start point 34 and end point 36.

The diameter of each start point 34 and each end point 36 of successive ramps 30,32 on both engagement surfaces 22,26 is substantially constant along the axial length of the support apparatus 16.

In use, the support sleeve 18 is slid into the casing precursor 10 to mate its support surface 20 with the internal surface 14 of the casing precursor 10. The external diameter x of the support 18 is slightly less than the internal diameter w of the casing 10, and so there will be regions where the support surface 20 is not fully engaged with the internal surface 14. In order to fill any void between the support surface 20 and internal surface 14, the deformation member 24 is entered into, and then pushed through the support sleeve 18 until it extends through the entire length of the support sleeve 18. The outer dimensions of the deformation member 24 remain substantially constant, and the support sleeve 18 expands to allow the deformation member 24 to enter the sleeve 18. The casing 10, support sleeve 18 and deformation member 24 are co-axially arranged relative to one another, and share a common axis. In axially displacing the support sleeve 18 and deformation member 26 relative to one another, the support sleeve 18 is deformed by the deformation member 24 such that the support surface 20 engages with substantially the whole of the inner surface 14 of the casing precursor 10. As shown in Figure 3a the deformation member 24 is pressed, for example by a hydraulic press, into the support sleeve 18 in the direction of arrow "A" in Figure 3, which causes the sleeve 18 to expand radially outwards in the direction shown by arrow "R". As the deformation member 24 is pushed further into the sleeve 18, as shown in Figure 3b and 3c, the support sleeve 18 is further radially deformed. The deformation member 24 is further pressed into the support sleeve 18 until the ramps 30,32 are engaged along a sufficient length of the precursor casing 10, as shown in Figures 3d and 3e. Thus the action of pushing the non deformable deformation member 24 through the sleeve 18 causes the sleeve 18 to expand radially such that it comes into contact with substantially all of the internal surface 14 of the casing precursor 10. The casing precursor 10 may be elastically deformed by the expansion of the support sleeve 18.

With such support in place, recessed pockets (not shown) are machined in the external surface 12 of the casing. The support 16 reacts loads acting on the casing precursor 10 by a machining tool during machining, thereby minimising distortion of the casing 10 and tearing of the pockets being formed.

The casing precursor 10 is elastically deformed during the mating process with the support sleeve 18. This is to say, the machining support apparatus 16 expands (i.e. in this embodiment, deforms) the casing precursor 10 up to, but not beyond, the point at which it will elastically take up its previous internal diameter w when the machining support apparatus 16 is removed from the casing 10.

Using this method, the pockets machined in such materials may be machined such that they have a radial thickness of less than 1 mm. Preferably the said pockets are machined to have a radial thickness substantially in the range 0.45mm to 0.85mm.

The casing precursor 10 may be fabricated from sheet metal. Alternatively the casing precursor 10 is a forged casing.

In a non deformed state, the support sleeve 18 is sized such that there is a clearance gap in the range of 300µm to 500µm between the support surface 20 and the casing precursor surface 14 it is to be mated to.

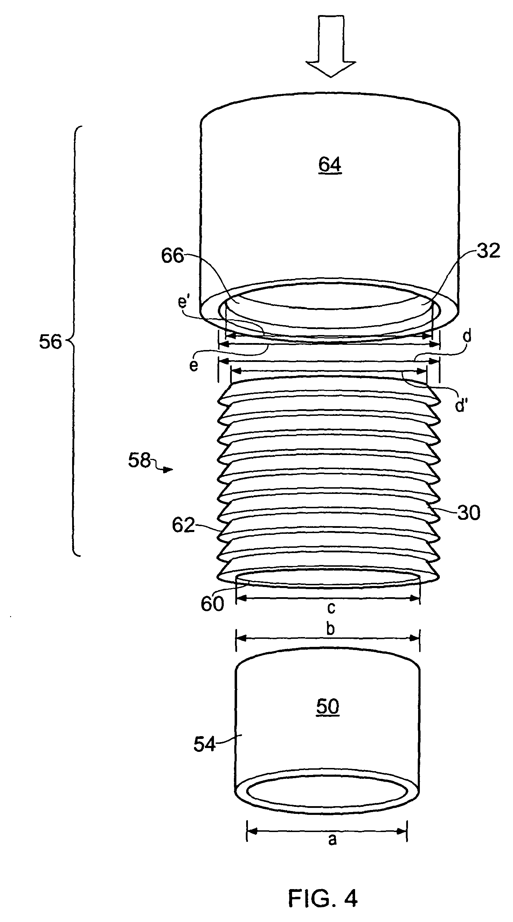

Shown in Figure 4 is an alternative embodiment of a machining support apparatus according to the present invention for supporting a casing precursor 50 whilst it is machined on its internal surface 52. The internal surface of the casing precursor 50 has diameter a and the external surface 54 of the casing precursor 50 has a diameter b. The precursor 50 does not form part of the invention and is mentioned here merely to assist in describing machining support apparatus 56 according to the present invention.

The apparatus 56 comprises a hollow support sleeve 58 having a substantially continuous internal support surface 60 for mating with the external surface 54 of casing precursor 50. The hollow support sleeve 58 is also provided with an outer engagement surface 62 substantially opposite the support surface 60. The (inner) support surface 60 has a diameter c. The (outer) engagement surface 62 of the support sleeve 58 has a maximum external diameter d and a minimum external diameter d'. The apparatus 56 also includes a deformation member 64 with an engagement surface 66 for coaxial location and engagement with the (outer) engagement surface 62 of the hollow support sleeve 58. The deformation member 64 has a maximum internal diameter e and a minimum internal diameter e'.

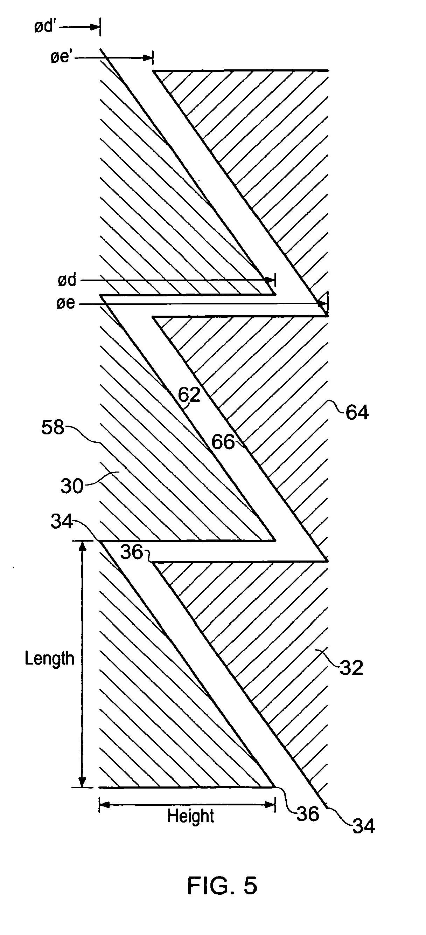

An enlarged view of the engagement surfaces 62,66 are shown in Figure 5. The deformation member 64 is shown as if centred on the support sleeve 58. The engagement surfaces 62,66 are shown separated for clarity, but it will be appreciated that in practice, the surfaces 62,66 will be in contact with one another since the deformation member 64 is "undersized" relative to the support sleeve 58.

The diameter of the inclined surface 38 of the ramp 32 of the engagement surface 66 of the deformation member 64 is 1 % less than a corresponding point on the ramp 30 on the engagement surface 62 of the support surface 62. Hence the maximum diameter e of the deformation member 64 is 1% less than the maximum external diameter d of the support sleeve 58. That is to say the diameter e at a start point 34 on a ramp 32 of the deformation member 64 (ie at the maximum internal diameter e of the deformation member 64) will be 1% less than the diameter d at an end point 36 on a ramp 30 of the support sleeve 58 (i.e. at the maximum external diameter d of the support sleeve 58). Likewise, the diameter e' at an end point 36 on a ramp 32 of the deformation member 64 (i.e. at the minimum internal diameter e' for the deformation member 64) will be 1 % less than the diameter d' at a start point 34 on a ramp 30 of the support sleeve 58 (i.e. at the minimum external diameter d' of the support sleeve 58). Likewise, all points along the inclined region 38 between the start point 34 and end point 36 of a ramp 32 of the deformation member 64 will have a diameter 1% less than the diameter at all points along the inclined region 38 between the start point 34 and end point 36 of a ramp 30 of the support sleeve 58.

The engagement surfaces 62,66 of the embodiment of Figure 4 are arranged and operate as shown in Figure 2 and 3 for the embodiment of Figure 1. In use, the support sleeve 58 is slid over the casing precursor 50 to mate its support surface 60 with the external surface 54 of the casing precursor 50. The internal diameter c of the support 58 is slightly greater than the external diameter b of the casing 50, and so there will be regions where the support surface 54 is not fully engaged with the external surface 54. In order to fill any void between the support surface 60 and external surface 54, the deformation member 64 is located around, and then pushed over the support sleeve 58, for example by a hydraulic press, until it extends over the entire length of the support sleeve 58. The dimensions of the deformation member 64 remain substantially constant, and the support sleeve 58 contracts to allow the deformation member 64 to slide over it. The casing 50, support sleeve 58 and deformation member 64 are co-axially arranged relative to one another, and share a common axis. In axially displacing the support sleeve 58 and deformation member 64 relative to one another, the support sleeve 58 is deformed by the deformation member 64 such that the support surface 60 engages with substantially the whole of the outer surface 54 of the casing precursor 50.

As will be appreciated, the action of the deformation member 64 on the support sleeve 58 is akin to that shown in Figure 3a-e, except that the sleeve 58 to caused to radially contract (rather than expand). Thus the action of pushing the non deformable deformation member 64 over the sleeve 58 causes the sleeve 58 to contract radially such that it comes into contact with substantially all of the outer surface 54 of the casing precursor 50. The casing precursor 50 may be elastically deformed by the contraction of the support sleeve 58.

With such support in place, recessed pockets (not shown) are machined in the internal surface 52 of the casing. The support 58 reacts loads acting on the casing precursor 50 by a machining tool during machining, thereby minimising distortion of the casing 50 and tearing of the pockets being formed.

In one embodiment the casing precursor is formed from a titanium alloy, and the support sleeve and deformation member are made from Chronite. Preferably the support sleeve has a thickness four times that of the casing precursor.

The casing precursor 10,50 is machined to produce any desired features on the surface 12,52. For example a polygonal isogrid structure may be machined into the surface 12,52. Alternatively or additionally, bosses are provided by the removal of material from the casing precursor 10,50.

## Claims

1. A method of manufacturing a thin wall isogrid or the like casing by a machining process; **characterised in that** the said method comprises the steps of, in the following order:
first mating a surface (14,54) of a casing precursor (10,50) opposite to a surface (12,52) of the casing precursor to be machined with a substantially continuous support surface (20,60) of a hollow support sleeve (18, 58);
then axially displacing the support sleeve (18,58) and deformation member (24,64) relative to one another to engage an engagement surface (26, 66) of a deformation member (24, 64) with an engagement surface (22,62) of the support sleeve (18,58), the engagement surface (22, 62) of the support sleeve (18,58) being opposite the support surface (20,60) and the deformation member (24,64) being co-axially arranged with the support sleeve (18,58), the deformation member (24,64) engagement surface (22,62) and support sleeve (18,58) engagement surface (22,62) being configured such that the support sleeve (18,58) is deformed by the deformation member (24,64) by the relative axial displacement in order to mate the support surface (20,60) with substantially the whole of the mating surface (14,54) of the casing precursor (10,50) opposite the surface (12,52) to be machined; and
machining a plurality of recessed pockets in the said surface (12,52) of the casing precursor (10,50); whereby the support sleeve (18,58) reacts loads acting on the casing precursor (10,50) by a machining tool during machining, thereby minimising distortion of the casing precursor (10,50) and tearing of the pockets being formed.

2. A method as claimed in claim 1 wherein the casing precursor (10,50) is elastically deformed during the mating process with the support sleeve (18,58).

3. A method as claimed in claim 1 or claim 2 wherein the casing precursor (10,50) is substantially cylindrical.

4. A method as claimed in claim 1 claim 2 or claim 3 wherein the casing precursor (10,50) is fabricated from sheet metal.

5. A method as claimed in claim 1, claim 2 or claim 3 wherein the casing precursor (10,50) is a forged casing precursor.

6. A method as claimed in any one of claims 1 to 5 wherein the casing precursor (10) is machined on its radially outer surface (12) and supported by the support sleeve (18) on its radially inner surface (20).

7. A method as claimed in any one of claims 1 to 5 wherein the casing precursor (50) is machined on its radially inner surface and supported by the support sleeve on its radially outer surface (54).

8. A method as claimed in any one of the preceding claims wherein the said pockets are machined to have a radial thickness of less than 1 mm.

9. A method as claimed in claim 8 wherein the said pockets are machined to have a radial thickness substantially in the range 0.45mm to 0.85mm.

10. Machining support apparatus for use in manufacturing a thin wall isogrid casing or the like by a machining process as described in any one of the preceding claims; the said support apparatus comprising :
a hollow support sleeve (18,58) having a substantially continuous support surface (20,60) for mating with a surface (14,54) of a casing precursor (10,50) opposite to the surface (12,52) of a casing precursor to be machined, and an engagement surface (22,62) substantially opposite the support surface (20,60);
a deformation member (24,64) with an engagement surface (26,66) for coaxial location and engagement with the engagement surface (22,62) of the support sleeve (18,58),
the deformation member engagement surface (26,66) and support sleeve engagement surface (20,60) being sized such that relative axial displacement of the support sleeve (18,58) and deformation member (24,64) will deform the support sleeve;
**characterised in that** either :
the deformation member (24) is configured to be inserted in the support sleeve (18) and has a maximum external diameter (z) at least 1% greater than the maximum internal diameter (y) of the support sleeve (18, 58) when the support sleeve (18, 58) is in a non deformed state; or
the support sleeve (58) is configured to be inserted in the deformation member (64) and has a maximum external diameter (d) at least 1% greater than the maximum internal diameter (e) of the deformation member (64) when the support sleeve (58) is in a non deformed state.

11. Machining support apparatus as claimed in claim 10 wherein the engagement surfaces (22,26; 62,66) of the support sleeve (18,58) and deformation member (24,64) comprise at least one ramp (30,32), the or each ramp (30,32)comprising a start point (34) and an end point (36) with an inclined region (38) of increasing height therebetween, the ramp height defined as the difference in diameter between the start point (34) and any point on the inclined surface (38) between the start point (34) and the end point (36).

12. Machining support apparatus as claimed in any one of claims 10 to 11 wherein, in a non deformed state, the support sleeve (18,58) and deformation member (24,64) are sized such that there is at least a 1 % difference in diameter between any point on the ramp (30) of the engagement surface (22,62) of the support sleeve (18,58) and a corresponding point on the ramp (32) on the engagement surface (26,66) of the deformation member (24,64).

13. Machining support apparatus as claimed in any one of claims 11 to 12 wherein the ratio of ramp (30,32) height at the end point (36) to ramp length is in the range of 1 : 5 to 1 : 10, where the ramp length is defined as the axial distance between the start point (34) and end point (36).

14. Machining support apparatus as claimed in claim 11 to 13 wherein the engagement surfaces (22,26; 62,66) each comprise at least two ramps (30,32) and the diameter of each start point (34) and each end point (36) of successive ramps (30,32) on both engagement surfaces (22,26; 62,66) is substantially constant along the axial length of the support apparatus.

15. Machining support apparatus as claimed in any one of claims 10 to 14 wherein, in a non deformed state, the support sleeve (18,58) is sized such that there is a clearance gap in the range of 300µm to 500µm between the support surface (20,60) and the casing precursor surface (14,54) it is to be mated to.

## Patentansprüche

1. Verfahren zur Herstellung eines dünnwandigen Isogitter- oder ähnlichen Gehäuses durch einen Bearbeitungsprozess, **dadurch gekennzeichnet, dass** das Verfahren in der folgenden Reihenfolge die Schritte aufweist:
erst Anpassen einer Oberfläche (14, 54) einer Gehäusevorform (10, 50) gegenüber einer Oberfläche (12, 52) der Gehäusevorform, die zu bearbeiten ist, mit einer im wesentlichen kontinuierlichen Stützfläche (20, 60) einer hohlen Stützhülse (18, 58),
dann axiales Versetzen der Stützhülse (18, 58) und eines Verformungsteils (24, 64) relativ zueinander, um eine Angriffsfläche (26, 66) des Verformungsteils (24, 64) in Anlage mit einer Anlagefläche (22, 62) der Stützhülse (18, 58) zu bringen, wobei die Anlagefläche (22, 62) der Stützhülse (18, 58) gegenüber der Stützfläche (20, 60) gelegen ist, und das Verformungsteil (24, 64) koaxial mit der Stützhülse (18, 58) angeordnet ist, wobei die Angriffsfläche (26, 66) des Verformungsteils (24, 64) und die Anlagefläche (22, 62) der Stützhülse (18, 58) so konfiguriert sind, dass die Stützhülse (18, 58) durch das Verformungsteil (24, 64) durch die relative axiale Versetzung verformt wird, und die Stützfläche (20, 60) an im wesentlichen die gesamte entsprechende Oberfläche (14, 54) der Gehäusevorform (10, 50) gegenüber der zu bearbeitenden Oberfläche (12, 52) anzupassen, und
Einarbeiten einer Vielzahl von Ausnehmungstaschen in die genannte Oberfläche (12, 52) der Gehäusevorform (10, 50), wobei die Stützhülse (18, 58), die auf die Gehäusevorform (10, 50) durch ein Bearbeitungswerkzeug während der Bearbeitung einwirkenden Kräfte aufnimmt, um **dadurch** einen Verzug der Gehäusevorform (10, 50) und eine Beeinträchtigung der gebildeten Taschen zu minimieren.

2. Verfahren nach Anspruch 1, wobei die Gehäusevorform (10, 50) während des Anpassungsvorgangs mit der Stützhülse (18, 58) elastisch verformt wird.

3. Verfahren nach Anspruch 1 oder Anspruch 2, wobei die Gehäusevorform (10, 50) im wesentlichen zylindrisch ist.

4. Verfahren nach Anspruch 1, Anspruch 2 oder Anspruch 3, wobei die Gehäusevorform (10, 50) aus Metallblech hergestellt wird.

5. Verfahren nach Anspruch 1, Anspruch 2 oder Anspruch 3, wobei die Gehäusevorform (10, 50) eine geschmiedete Gehäusevorform ist.

6. Verfahren nach einem der Ansprüche 1 bis 5, wobei die Gehäusevorform (10) auf ihrer radial äußeren Oberfläche (12) bearbeitet und durch die Stützhülse (18) auf ihrer radial inneren Oberfläche (20) abgestützt wird.

7. Verfahren nach einem der Ansprüche 1 bis 5, wobei die Gehäusevorform (50) auf ihrer radial inneren Oberfläche bearbeitet und durch die Stützhülse auf ihrer radial äußeren Oberfläche abgestützt wird.

8. Verfahren nach einem der vorhergehenden Ansprüche, wobei die genannten Taschen so eingearbeitet werden, dass sie eine radiale Dicke von weniger als 1 mm haben.

9. Verfahren nach Anspruch 8, wobei die genannten Taschen so eingearbeitet werden, dass sie eine radiale Dicke im wesentlichen im Bereich von 0,45 mm bis 0,85 mm haben.

10. Bearbeitungsstützvorrichtung zur Verwendung bei der Herstellung eines dünnwandigen Isogitter-Gehäuses oder dergleichen durch einen Bearbeitungsprozess nach einem der vorhergehenden Ansprüche, wobei die Stützvorrichtung aufweist:
eine hohle Stützhülse (18, 58) mit einer im wesentlichen kontinuierlichen Stützfläche (20, 60) zur Anpassung mit einer Oberfläche (14, 54) einer Gehäusevorform (10, 50) gegenüber der zu bearbeitenden Oberfläche (12, 52) der Gehäusevorform, und mit einer im wesentlichen gegenüber der Stützfläche (20, 60) befindlichen Anlagefläche (22, 62),
ein Verformungsteil (24, 64) mit einer Angriffsfläche (26, 66) zur koaxialen Positionierung und Anlage mit der Anlagefläche (22, 62) der Stützhülse (18, 58), wobei die Angriffsfläche (26, 66) des Verformungsteils und die Anlagefläche (20, 60) der Stützhülse so bemessen sind, dass ein relativer axialer Versatz der Stützhülse (18, 58) und des Verformungsteils (24, 64) die Stützhülse verformt,
**dadurch gekennzeichnet, dass**
entweder das Verformungsteil (24) so konfiguriert ist, dass es in die Stützhülse (18) einführbar ist und einen maximalen Außendurchmesser (z) hat, der mindestens 1 % größer als der maximale Innendurchmesser (y) der Stützhülse (18, 58) ist, wenn die Stützhülse (18, 58) sich in einem nichtverformten Zustand befindet,
oder die Stützhülse (58) so konfiguriert ist, dass sie in das Verformungsteil (64) einführbar ist und einen maximalen Außendurchmesser (d) hat, der mindestens 1 % größer als der maximale Innendurchmesser (e) des Verformungsteils (64) ist, wenn die Stützhülse (58) sich in einem nichtverformten Zustand befindet.

11. Bearbeitungsstützvorrichtung nach Anspruch 10, wobei die Anlage- und Stützflächen (22, 26; 62, 66) der Stützhülse (18, 58) und des Verformungsteils (24, 64) mindestens eine Rampe (30, 32) aufweisen, wobei die oder jede Rampe (30, 32) eine Anfangsstelle (34) und eine Endstelle (36) mit einem dazwischen befindlichen geneigten Bereich (38) ansteigender Höhe aufweist, wobei die Rampenhöhe als Differenz des Durchmessers zwischen der Anfangsstelle (34) und einer Endstelle auf der geneigten Fläche (38) zwischen der Anfangsstelle (34) und der Endstelle (36) definiert ist.

12. Bearbeitungsstützvorrichtung nach einem der Ansprüche 10 bis 11, wobei in einem nichtverformten Zustand die Stützhülse (18, 58) und das Verformungsteil (24, 64) so bemessen sind, dass mindestens eine Durchmesserdifferenz von 1 % zwischen irgendeinem Punkt auf der Rampe (30) der Anlagefläche (22, 62) der Stützhülse (18, 58) und einem entsprechenden Punkt auf der Rampe (32) der Angriffsfläche (26, 66) des Verformungsteils (24, 64) vorhanden ist.

13. Bearbeitungsstützvorrichtung nach einem der Ansprüche 11 bis 12, wobei das Verhältnis der Höhe der Rampe (30, 32) an der Endstelle (36) zur Rampenlänge im Bereich von 1:5 bis 1:10 liegt, wobei die Rampenlänge als die axiale Distanz zwischen der Anfangsstelle (34) und der Endstelle (36) definiert ist.

14. Bearbeitungsstützvorrichtung nach den Ansprüchen 11 bis 13, wobei die Anlage- und Stützflächen (22, 26; 62, 66) jeweils mindestens zwei Rampen (30, 32) aufweisen, und der Durchmesser jeder Anfangsstelle (34) und jeder Endstelle (36) aufeinander folgender Rampen (30, 32) an beiden Flächen (22, 26; 62, 66) im wesentlichen konstant entlang der axialen Länge der Stützvorrichtung ist.

15. Bearbeitungsstützvorrichtung nach einem der Ansprüche 10 bis 14, wobei in einem nichtverformten Zustand die Stützhülse (18, 58) so bemessen ist, dass ein freier Spalt im Bereich von 300 µm bis 500 µm zwischen der Stützfläche (20, 60) und der Gehäusevorform-Oberfläche (14, 54), die daran anzupassen ist, besteht.

## Revendications

1. Procédé pour fabriquer un boîtier isogrille ou similaire à paroi mince par un procédé d'usinage ; **caractérisé en ce que** ledit procédé comprend, dans l'ordre suivant, les étapes consistant à :
coupler tout d'abord une surface (14, 54) d'un précurseur de boîtier (10, 50) opposée à la surface (12, 52) du précurseur de boîtier à usiner avec une surface de support (20, 60) sensiblement continue d'un manchon de support creux (18, 58) ;
déplacer ensuite de manière axiale, le manchon de support (18, 58) et l'élément de déformation (24, 64) l'un par rapport à l'autre pour mettre en prise une surface de mise en prise (26, 66) d'un élément de déformation (24, 64) avec une surface de mise en prise (22, 62) du manchon de support (18, 58), la surface de mise en prise (22, 62) du manchon de support (18, 58) étant opposée à la surface de support (20, 60) et l'élément de déformation (24, 64) étant agencé de manière coaxiale avec le manchon de support (18, 58), la surface de mise en prise (22, 62) de l'élément de déformation (24, 64) et la surface de mise en prise (22, 62) du manchon de support (18, 58) étant configurées de sorte que l'élément de support (18, 58) est déformé par l'élément de déformation (24, 64) par le déplacement axial relatif afin de coupler la surface de support (20, 60) sensiblement avec la totalité de la surface de couplage (14, 54) du précurseur de boîtier (10, 50) opposée à la surface (12, 52) à usiner ; et
usiner une pluralité de poches évidées dans ladite surface (12, 52) du précurseur de boîtier (10, 50) ; moyennant quoi le manchon de support (18, 58) réagit aux charges agissant sur le précurseur de boîtier (10, 50) par un outil d'usinage pendant l'usinage, minimisant ainsi la déformation du précurseur de boîtier (10, 50) et la déchirure des poches qui sont formées.

2. Procédé selon la revendication 1, dans lequel le précurseur de boîtier (10, 50) est élastiquement déformé pendant le procédé de couplage avec le manchon de support (18, 58).

3. Procédé selon la revendication 1 ou la revendication 2, dans lequel le précurseur de boîtier (10, 50) est sensiblement cylindrique.

4. Procédé selon la revendication 1, la revendication 2 ou la revendication 3, dans lequel le précurseur de boîtier (10, 50) est fabriqué à partir d'une tôle.

5. Procédé selon la revendication 1, la revendication 2 ou la revendication 3, dans lequel le précurseur de boîtier (10, 50) est un précurseur de boîtier forgé.

6. Procédé selon l'une quelconque des revendications 1 à 5, dans lequel le précurseur de boîtier (10) est usiné sur la surface radialement externe (12) et supporté par le manchon de support (18) sur sa surface radialement interne (20).

7. Procédé selon l'une quelconque des revendications 1 à 5, dans lequel le précurseur de boîtier (50) est usiné sur sa surface radialement interne et supporté par le manchon de support sur sa surface radialement externe (54).

8. Procédé selon l'une quelconque des revendications précédentes, dans lequel lesdites poches sont usinées pour avoir une épaisseur radiale inférieure à 1 mm.

9. Procédé selon la revendication 8, dans lequel lesdites poches sont usinées pour avoir une épaisseur radiale sensiblement de l'ordre de 0,45 mm à 0,85 mm.

10. Appareil de support d'usinage destiné à être utilisé pour fabriquer un boîtier isogrille à paroi mince ou similaire par un procédé d'usinage selon l'une quelconque des revendications précédentes, ledit appareil de support comprenant :
un manchon de support creux (18, 58) ayant une surface de support (20, 60) sensiblement continue pour se coupler avec une surface (14, 54) d'un précurseur de boîtier (10, 50) opposée à la surface (12, 52) d'un précurseur de boîtier à usiner, et une surface de mise en prise (22, 62) sensiblement opposée à la surface de support (20, 60) ;
un élément de déformation (24, 64) avec une surface de mise en prise (26, 66) pour l'emplacement coaxial et la mise en prise avec la surface de mise en prise (22, 62) du manchon de support (18, 58),
la surface de mise en prise (26, 66) de l'élément de déformation et la surface de mise en prise (20, 60) du manchon de support étant dimensionnées de sorte que le déplacement axial relatif du manchon de support (18, 58) et de l'élément de déformation (24, 64) déforme le manchon de support ;
**caractérisé en ce que** :
l'élément de déformation (24) est configuré pour être inséré dans le manchon de support (18) et a un diamètre externe maximum (z) d'au moins 1 % supérieur au diamètre interne maximum (y) du manchon de support (18, 58) lorsque le manchon de support (18, 58) est dans un état non déformé ; ou bien
le manchon de support (58) est configuré pour être inséré dans l'élément de déformation (64) et a un diamètre externe maximum (d) d'au moins 1% supérieur au diamètre interne maximum (e) de l'élément de déformation (64) lorsque le manchon de support (58) est dans un état non déformé.

11. Appareil de support d'usinage selon la revendication 10, dans lequel les surfaces de mise en prise (22, 26 ; 62, 66) du manchon de support (18, 58) et de l'élément de déformation (24, 64) comprennent au moins une rampe (30, 32), la ou chaque rampe (30, 32) comprenant un point de départ (34) et un point de fin (36) avec une région inclinée (38) de hauteur croissante entre eux, la hauteur de rampe étant définie comme étant la différence de diamètre entre le point de départ (34) et n'importe quel point sur la surface inclinée (38) entre le point de départ (34) et le point de fin (36).

12. Appareil de support d'usinage selon l'une quelconque des revendications 10 à 11, dans lequel, dans un état non déformé, le manchon de support (18, 58) et l'élément de déformation (24, 64) sont dimensionnés de sorte qu'il existe au moins une différence de 1% de diamètre entre n'importe quel point sur la rampe (30) de la surface de mise en prise (22, 62) du manchon de support (18, 58) et un point correspondant sur la rampe (32) sur la surface de mise en prise (26, 66) de l'élément de déformation (24, 64).

13. Appareil de support d'usinage selon l'une quelconque des revendications 11 à 12, dans lequel le rapport de la hauteur de rampe (30, 32) au point de fin (36) sur la longueur de rampe est de l'ordre de 1:5 à 1:10, où la longueur de rampe est définie comme étant la distance axiale entre le point de départ (34) et le point de fin (36).

14. Appareil de support d'usinage selon les revendications 11 à 13, dans lequel les surfaces de mise en prise (22, 26 ; 62, 66) comprennent chacune au moins deux rampes (30, 32) et le diamètre de chaque point de départ (34) et de chaque point de fin (36) des rampes successives (30, 32) sur les deux surfaces de mise en prise (22, 26 ; 62, 66) est sensiblement constant le long de la longueur axiale de l'appareil de support.

15. Appareil de support d'usinage selon l'une quelconque des revendications 10 à 14, dans lequel, dans un état non déformé, le manchon de support (18, 58) est dimensionné de sorte qu'il existe un espace de jeu de l'ordre de 300 µm à 500 µm entre la surface de support (20, 60) et la surface de précurseur de boîtier (14, 54) avec laquelle elle doit se coupler.
